# EUROPÄISCHE PATENTSCHRIFT

(11) **EP 2 636 917 B1**
(45) Veröffentlichungstag und Bekanntmachung des Hinweises auf die Patenterteilung: **29.01.2014**
(21) Anmeldenummer: 13000878.2
(22) Anmeldetag: 21.02.2013
(51) Int. Cl.: F16D 55/226, F16D 65/18, F16D 65/56

(54) **Verschleißnachstellvorrichtung für Scheibenbremsen**
Wear adjustment device for disc brakes
Dispositif de réglage d'usure pour freins à disques

(30) Priorität: 09.03.2012 DE 202012002320 U
(43) Veröffentlichungstag der Anmeldung: 11.09.2013
(73) Patentinhaber: Knott GmbH, 83125 Eggstätt (DE)
(72) Erfinder: Gruber, Robert, 83539 Pfaffing (DE)
(74) Vertreter: Bauer, Friedrich

(56) Entgegenhaltungen:
- EP-A2- 1 820 992
- WO-A1-2006/111136
- DE-C1- 19 729 024

## Beschreibung

Die Erfindung betrifft eine Verschleißnachstellvorrichtung für eine Scheibenbremse gemäß dem Oberbegriff des Anspruchs 1. -

Verschleißnachstellvorrichtungen dieser Art sind beispielsweise aus der DE 197 29 024 C1 und DE 10 2004 037 771 A1 bekannt. Sie dienen dazu, das Lüftspiel zwischen Bremsscheibe und Bremsbelägen, das im optimalen Fall beispielsweise bei 0,7 mm liegt, auch bei einem Verschleiß der Bremsbeläge und der Bremsscheibe möglichst konstant auf diesem Wert zu halten. Dies ist deswegen von großer Bedeutung, da der Bremshub der Zuspanneinrichtung innerhalb der Scheibenbremsen meist nur wenige Millimeter, beispielsweise etwa 4 mm, und damit nur einen Bruchteil desjenigen Weges beträgt, den die Beläge verschleißen können. Die Bremsbeläge müssen daher bei Verschleiß automatisch nachgestellt werden. Je genauer der optimale Lüftspielwert realisiert wird, desto sicherer ist die Funktion der Scheibenbremse.

Grundprinzip der in der DE 197 29 024 C1 und DE 10 2004 037 771 A1 beschriebenen Scheibenbremse ist ein Schrauben- /Muttern-Prinzip, d.h. eine Spindelprinzip, bei dem die Bremsbeläge durch Stellspindeln gegen die Bremsscheibe gedrückt werden. Die Stellspindeln sind mittels eines Gewindes in eine Traverse eingeschraubt, die beim Bremsen den Bremshub ausführt und mittels eines Übersetzungs-Drehhebels von einem Aktuator, beispielsweise in der Form eines Pneumatikzylinders, betätigt wird. Die Verschleißnachstellvorrichtung umfasst dabei einen Drehantrieb, mit dem die Stellspindeln bei zunehmendem Verschleiß der Bremsbeläge immer weiter aus der Traverse in Richtung Bremsscheibe herausgeschraubt werden können.

Die bekannten Nachstellvorrichtungen funktionieren derart, dass, sobald der Übersetzungs-Drehhebel vom Aktuator verschwenkt wird, gleichzeitig ein Antriebselement, das am Drehhebel befestigt oder einteilig mit diesem ausgeführt ist, um die Drehachse des Drehhebels mit verdreht wird. Dieses Antriebselement greift in eine hierzu winklig angeordnete Schaltgabel ein, die drehfest mit einer Stellspindel verbunden ist. Die Schaltgabel stellt damit ein Abtriebselement dar. Antriebselement und Abtriebselement bilden damit ein Winkelgetriebe. Durch ein definiertes Spiel in diesem Winkelgetriebe wird die Traverse und damit die Stellspindeln bei Betätigung der Bremse zuerst einen gewissen Weg, der dem Lüftspiel entspricht, bewegt, ohne dass die Verschleißnachstellvorrichtung betätigt wird. Nach Überwinden des Lüftspiels, d.h. des Leerweges, greifen jedoch Antriebselement und Abtriebselement des Winkelgetriebes ineinander und der Nachstellvorgang erfolgt durch Drehen der Stellspindeln, so lange die Bremsbeläge noch nicht an der Bremsscheibe anliegen.

Die bekannten Verschleißnachstellvorrichtungen haben, bedingt durch die Bauform des Winkelgetriebes zwischen Antriebselement und Abtriebselement, den Nachteil, dass das Lüftspiel nicht in dem gewünschten genauen Maß eingestellt werden kann. Bauartbedingt liegen die Achse der Stellspindeln und die Achse des Drehhebels nicht in einer Drehebene, was kein einfaches Standardwinkelgetriebe zulässt. Es muss ein Achsversatz zwischen Antriebs- und Abtriebselement berücksichtigt werden. Dies führt zu Freiform-Zahnelementen mit nicht eindeutigen Berührungsflächen beim Abgleiten der Zahnelemente und damit zu unerwünscht großen Toleranzen. Weiterhin wird das Antriebselement üblicherweise aus der Kontur des Drehhebels geformt. Da der Drehhebel häufig ein Schmiedeteil ist, unterliegt auch das Antriebselement somit erhöhten Toleranzen. Aus der Summe dieser Ungenauigkeiten ergeben sich die unbefriedigend hohen Luftspieltoleranzen. Ein zu geringes Lüftspiel kann dabei zu erhöhtem Belagverschleiß oder gar zu einem Heißlaufen der Bremse führen. Bei einem zu großen Lüftspiel kann die maximale Zuspannkraft nicht mehr erreicht werden.

Der Erfindung liegt die Aufgabe zugrunde, eine Verschleißnachstellvorrichtung für eine Scheibenbremse zu schaffen, die eine besonders genaue automatische Nachstellung der Bremsbeläge bei Verschleiß der Bremsbeläge und Bremsscheibe ermöglicht.

Diese Aufgabe wird erfindungsgemäß durch eine Verschleißnachstellvorrichtung mit den Merkmalen des Anspruchs 1 gelöst. Vorteilhafte Ausführungsformen der Erfindung sind in den weiteren Ansprüchen beschrieben.

Erfindungsgemäß ist das Antriebselement des Stellspindel-Drehantriebs mit der Traverse gekoppelt und von der Traverse verschiebbar, wobei das Antriebselement mit dem Abtriebselement derart zusammenwirkt, dass die Schiebebewegung des Antriebselements eine Drehbewegung des Abtriebselements erzeugt.

Im Unterschied zum Stand der Technik ist somit das Antriebselement des Drehantriebs, mit dem die Stellspindel in Umdrehung versetzt wird, nicht mehr Teil des Übersetzungs-Drehhebels, der vom Aktuator verschwenkt wird. Vielmehr ist das Antriebselement der Nachstelleinrichtung als Schiebeteil ausgebildet, das von der Traverse linear verschoben wird. Die Hubbewegung der Traverse wird ausgenutzt, um eine Drehbewegung der Stellspindel zu erzeugen. Auf komplizierte, relativ ungenaue Winkelgetriebe zwischen Antriebselement und Abtriebselement kann damit verzichtet werden. Antriebs- und Abtriebselement können in einer Achse angeordnet werden. Weiterhin kann der Übersetzungs-Drehhebel auf wesentlich einfachere Weise ohne die angeschmiedeten Antriebselemente/Zahnelemente ausgebildet werden. Toleranzbedingte Abweichungen des Lüftspiels können wesentlich geringer gehalten werden.

Gemäß einer vorteilhaften Ausführungsform sind sowohl das Antriebselement als auch das Abtriebselement koaxial zur Stellspindel angeordnet. Hierdurch lässt sich eine kompakte, leichtgängige Bauform der Nachstellvorrichtung realisieren.

Besonders vorteilhaft ist es zu diesem Zweck, wenn sowohl das Antriebselement als auch das Abtriebselement als Hülsen ausgebildet sind, wobei das Abtriebselement zumindest überwiegend innerhalb des Antriebselements angeordnet ist.

Gemäß einer besonders vorteilhaften Ausführungsform weist das Antriebselement ein Innengewinde oder eine Schrägverzahnung auf, das bzw. die mit einem Außengewinde oder einer Schrägverzahnung des Abtriebselements zusammenwirkt. Das Gewinde oder die Schrägverzahnung des Antriebs- und Abtriebselements ergeben eindeutige Gleitflächen, die mit sehr geringen Toleranzen hergestellt werden können. In jedem Fall sind die Gewinde bzw. die Schrägverzahnungen derart ausgebildet, dass eine lineare Hubbewegung des Antriebselements eine Drehbewegung des Abtriebselements und damit der Stellspindel erzeugt.

Vorteilhafterweise weist das Abtriebselement ein äußeres Schneckengewinde auf.

Gemäß einer vorteilhaften Ausführungsform ist das Antriebselement dreh- und verschiebefest mit der Traverse verbunden, wobei zwischen Antriebselement und Abtriebselement ein Axialspiel vorgesehen ist, das dem gewünschten Lüftspiel der Scheibenbremse entspricht. Hierdurch kann auf einfache Weise sichergestellt werden, dass der Nachstellvorgang, d.h. das Drehen der Stellspindel relativ zur Traverse, erst dann eingeleitet wird, wenn der vorbestimmte Leerhub, der dem gewünschten Lüftspiel entspricht, durchfahren ist und die Bremsbeläge noch nicht an der Bremsscheibe anliegen.

Alternativ hierzu ist es auch möglich, dass das Antriebselement über eine Strecke, die dem gewünschten Lüftspiel der Scheibenbremse entspricht, begrenzt axial verschiebbar an der Traverse befestigt ist. Da sich in diesem Fall das Antriebselement über den Leerhub relativ zur Traverse verschieben kann, ist es nicht mehr erforderlich, zwischen dem Antriebselement und dem Abtriebselement, beispielsweise im Bereich des Gewindes oder der Schrägverzahnung, ein entsprechendes Axialspiel vorzusehen. Vielmehr kann dieser letztgenannte Kopplungsbereich spielfrei ausgebildet sein.

Gemäß einer besonders vorteilhaften Ausführungsform weist die Verschleißnachstellvorrichtung einen Freilauf auf, auf dem das Abtriebselement gelagert ist, eine Kupplungsbuchse, auf welcher der Freilauf gelagert ist, wobei das Abtriebselement mittels des Freilaufs mit der Kupplungsbuchse in einer Drehrichtung drehfest und in der anderen Drehrichtung drehbar verbunden ist, und eine im Bremssattel drehbar gelagerte Welle, auf der die Kupplungsbuchse gelagert und die drehfest, aber axial verschiebbar mit der Stellspindel verbunden ist. Über den Freilauf lässt sich auf relativ einfache Weise erreichen, dass eine Nachstelldrehung der Stellspindel nur beim Vorwärtshub der Traverse, d.h. beim Betätigen der Bremse, vorgenommen wird, während verhindert wird, dass beim Rückwärtshub der Traverse die Stellspindel wieder zurückgedreht wird.

Bei der letztgenannten Ausführungsform ist es alternativ auch möglich, dass das Abtriebselement über eine Strecke, die dem gewünschten Lüftspiel der Scheibenbremse entspricht, begrenzt axial verschiebbar auf dem Freilauf befestigt ist. Das erforderliche, nachstellfreie Axialspiel, innerhalb dessen keine Rotation der Stellspindel erfolgt, ist in diesem Fall somit nicht im Verbindungsbereich zwischen Antriebselement und Abtriebselement und auch nicht zwischen Traverse und Antriebselement, sondern zwischen Abtriebselement und Freilauf vorgesehen.

Vorzugsweise sind die Kupplungsbuchse und ein koaxialer, drehfest auf der Welle angeordneter Kupplungsring Teile einer Kupplung, die bei einer Drehbewegung in Zuspannrichtung ein höheres Drehmoment übertragen kann als bei der entgegengesetzten Drehbewegung. Dies hat den Vorteil, dass einerseits das für die Nachstellung der Stellspindel erforderliche Drehmoment bei einem Nachstellvorgang zuverlässig über die Kupplung auf die Welle und von dieser auf die Stellspindel übertragen werden kann, dass andererseits jedoch die Welle auch in entgegengesetzter Drehrichtung manuell auf relativ einfache Weise derart unter Lösen der Kupplungsverbindung gedreht werden kann, dass die Stellspindel und damit die Bremsbeläge im Fall eines Belagwechsels auf relativ einfache Weise zurückgedreht werden können.

Vorzugsweise ist die Kupplung als Kugelrampenkupplung ausgebildet, wobei Kupplungsbuchse und Kupplungsring Kugelsitzflächen in der Form von kalottenförmigen Vertiefungen aufweisen, von denen sich schräge Kugelrampen ausschließlich einsinnig in Umfangsrichtung erstrecken. Hierdurch kann auf einfache Weise erreicht werden, dass die Kupplung in der einen Drehrichtung als starre Drehverbindung wirkt, die in dieser Drehrichtung hohe Drehmomente übertragen kann, während durch Drehen der Welle in umgekehrter Drehrichtung die Kupplungsverbindung bereits bei relativ niedrigen Drehmomenten gelöst werden kann und die Stellspindel auf einfache Weise manuell zurückgeschraubt werden kann.

Vorzugsweise sind Kupplungsbuchse und Kupplungsring axial verschiebbar auf der Welle angeordnet und von der Feder mit einer Federkraft abgestützt, die derart bemessen ist, dass bei Erreichen eines bestimmten maximalen Nachstellmoments die vom Antriebselement auf das Abtriebselement aufgebrachte Axialkraft die Höhe der Federkraft erreicht, so dass beim weiteren Verschieben des Antriebselements das Abtriebselement, der Freilauf, die Kupplungsbuchse und der Kupplungsring rotationsfrei gegen die Feder verschoben werden. Hierdurch wird auf einfache Weise bei einem Zuspannvorgang eine Lastabschaltung realisiert, wenn die Bremsbeläge an der Bremsscheibe anliegen, während die Traverse und damit das Antriebselement vom Aktuator noch weiter Richtung Bremsscheibe gedrückt wird. Diese Lastabschaltung erfolgt, ohne dass die Kupplung gelöst werden müsste, d.h. ohne dass eine Relativbewegung zwischen Kupplungsbuchse und Kupplungsring stattfindet. Die Lastabschaltung verursacht damit keinen Verschleiß der Kupplungsteile.

Vorzugsweise ist zwischen Antriebselement und Abtriebselement eine Drehverhinderungseinrichtung vorgesehen, die bei unbetätigter Scheibenbremse eine Drehung des Abtriebselements sperrt. Hierdurch kann ein ungewolltes Drehen und damit Verstellen der Stellspindel, beispielsweise aufgrund von Erschütterungen, verhindert werden. Vorzugsweise umfasst die Drehverhinderungseinrichtung eine Feder, die bei unbetätigter Bremse eine Reibkraft zwischen Antriebselement und Abtriebselement erzeugt.

Alternativ hierzu kann dies auch dadurch erreicht werden, dass die Kupplungsbuchse drehfest mit einer ersten Reibscheibe verbunden ist, während das Abtriebselement drehfest mit einer zweiten Reibscheibe verbunden ist, die bei unbetätigter Bremse von einer am Antriebselement abgestützten Feder in drehfester Anlage mit der ersten Reibscheibe gehalten wird.

Die Erfindung wird nachfolgend anhand der Zeichnungen beispielshaft näher erläutert. Es zeigen:
- Figur 1 :: einen Vertikalschnitt durch eine Scheibenbremse, in der die erfindungsgemäße Verschleißnachstellvorrichtung zum Einsatz kommen kann,
- Figur 2 :: einen Horizontalschnitt durch die Scheibenbremse von Figur 1 mit Verschleißnachstellvorrichtung,
- Figur 3 :: eine vergrößerte Darstellung des Ausschnitts III von Figur 2,
- Figur 4 :: eine perspektivische Ansicht eines Nachstellers,
- Figur 5 :: einen Längsschnitt durch den Nachsteller von Figur 4,
- Figur 6 :: eine vergrößerte Darstellung des Ausschnitts VI von Figur 5,
- Figur 7 :: eine perspektivische Darstellung der Kupplungsbuchse,
- Figur 8 :: eine perspektivische Darstellung des Kupplungsrings,
- Figur 9 :: eine perspektivische Darstellung der Welle und der Mitnehmerscheibe,
- Figur 10 :: eine perspektivische Darstellung des Abtriebselements,
- Figur 11 :: eine perspektivische Darstellung des Antriebselements, und
- Figur 12 :: einen Horizontalschnitt eines Ausschnitts einer Scheibenbremse mit einer alternativen Ausführungsform der Verschleißnachstellvorrichtung.

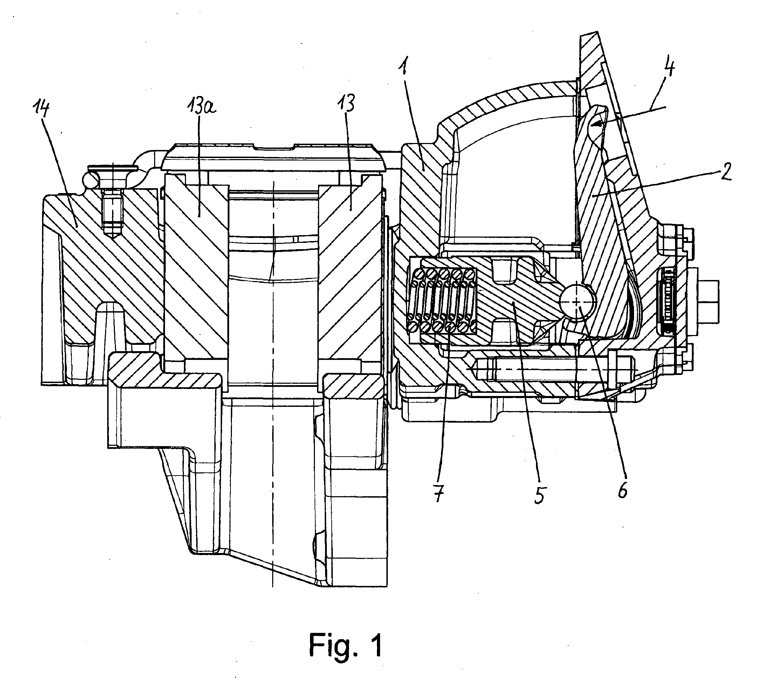

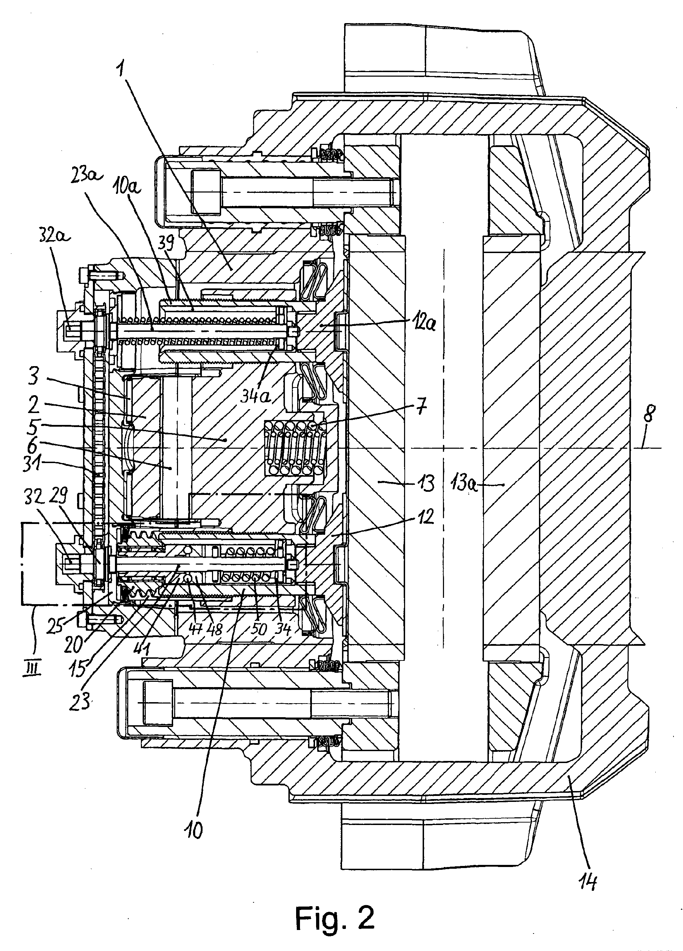

Anhand der Figuren 1 und 2 werden zunächst die wesentlichen Elemente der Scheibenbremse sowie die grundsätzliche Funktionsweise näher erläutert.

In einem Bremssattel 1 ist in üblicher Weise ein Übersetzungs-Drehhebel 2 rückseitig mittels eines Nadellagers 3 abgestützt und dadurch drehbar gelagert. Drückt ein nicht dargestellter Aktuator, beispielsweise ein pneumatischer Bremszylinder, mit seiner Stößelstange in Richtung des Pfeils 4 (Figur 1) auf das obere Ende des Drehhebels 2, wird dieser im Gegenuhrzeigersinn verschwenkt, wobei er auf dem Nadellager 3 abrollt.

Im unteren Bereich ist der Drehhebel 2 mit einem an einer Traverse 5 befestigten Zylinderstift 6 in Eingriff. Die Traverse 5 ist in einer Ebene, die senkrecht zur Ebene einer nicht dargestellten Bremsscheibe liegt, innerhalb des Bremssattels 1 verschiebbar geführt. Eine sich am Bremssattel 1 abstützende Druckfeder 7 übt auf die Traverse 5 eine permanente Vorspannkraft in Rückwärtsrichtung, d.h. in Richtung des Drehhebels 2 und damit weg von der Bremsscheibe, aus, wodurch sowohl die Traverse 5 als auch der Drehhebel 2 bei nicht betätigter Bremse in die Ausgangsstellung zurück gedrängt werden.

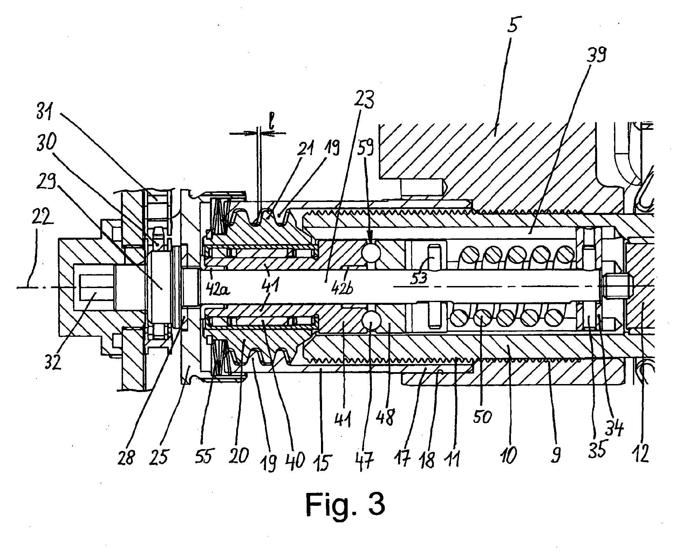

Die Traverse 5 ist, wie aus Figur 2 ersichtlich, symmetrisch zu einer Mittelebene 8 der Scheibenbremse ausgebildet. In den beiden seitlichen Endbereichen weist die Traverse 5 jeweils eine Zylinderbohrung mit einem Innengewinde 9 (Figur 3) auf, in das jeweils eine rohrförmige Stellspindel 10, 10a einschraubbar ist, die ein entsprechendes Außengewinde 11 aufweist. Das stirnseitige Ende einer jeden Stellspindel 10, 10a drückt gegen ein Druckstück 12, 12a an dem ein Bremsbelag 13 abgestützt ist.

Aufgrund der beschriebenen Anordnung wird bei einer Betätigung der Bremse die Traverse 5 zusammen mit den beiden Stellspindeln 10, 10a und den Druckstücken 12, 12a in Richtung Bremsscheibe verschoben, wodurch der Bremsbelag 13 von einer Seite her an die Bremsscheibe angedrückt wird. Die dargestellte Scheibenbremse ist als Gleitsattelscheibenbremse ausgebildet, so dass beim Andrücken des Bremsbelags 13 der Gleitsattel 14 in bekannter Weise durch die dabei entstehende Reaktionskraft in entgegengesetzter Richtung verschoben wird, wodurch ein auf der gegenüberliegenden Seite der Bremsscheibe angeordneter Bremsbelag 13a ebenfalls an die Bremsscheibe gedrückt wird.

Um das Lüftspiel zwischen der Bremsscheibe und den Bremsbelägen 13, 13a auch bei einem Verschleiß dieser Teile auf einem konstanten, vorbestimmten Wert zu halten, ist eine koaxial zur Stellspindel 10 angeordnete und beim Zuspannvorgang der Scheibenbremse wirksam werdende Verschleißnachstellvorrichtung mit einem Stellspindel-Drehantrieb vorgesehen, der im Folgenden näher beschrieben wird.

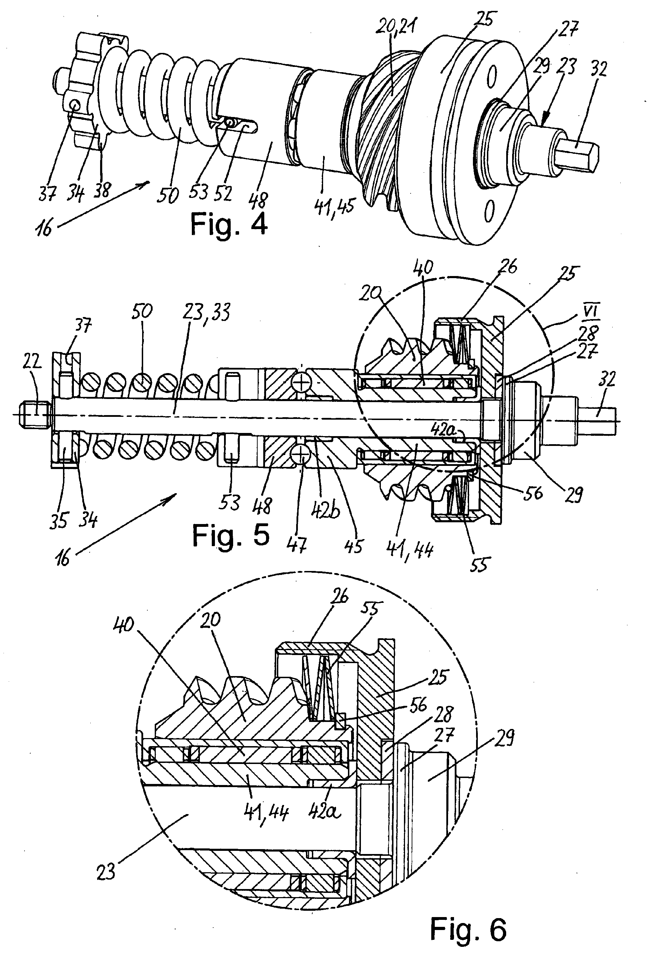

Der Stellspindel-Drehantrieb umfasst insbesondere ein mit der Traverse 5 fest verbundenes Antriebselement 15 in Form einer Hülse oder eines Rohres, sowie einen mit dem Antriebselement 15 zusammenwirkenden Nachsteller 16, der in Einzeldarstellung in den Figuren 4 und 5 dargestellt ist und bei einem Nachstellvorgang die Stellspindel 10 aus der Traverse 5 heraus schraubt, wie später noch näher beschrieben wird.

Wie aus den Figuren 2 und 3 ersichtlich, sind Stellspindel 10, Antriebselement 15 und Nachsteller 16 koaxial angeordnet.

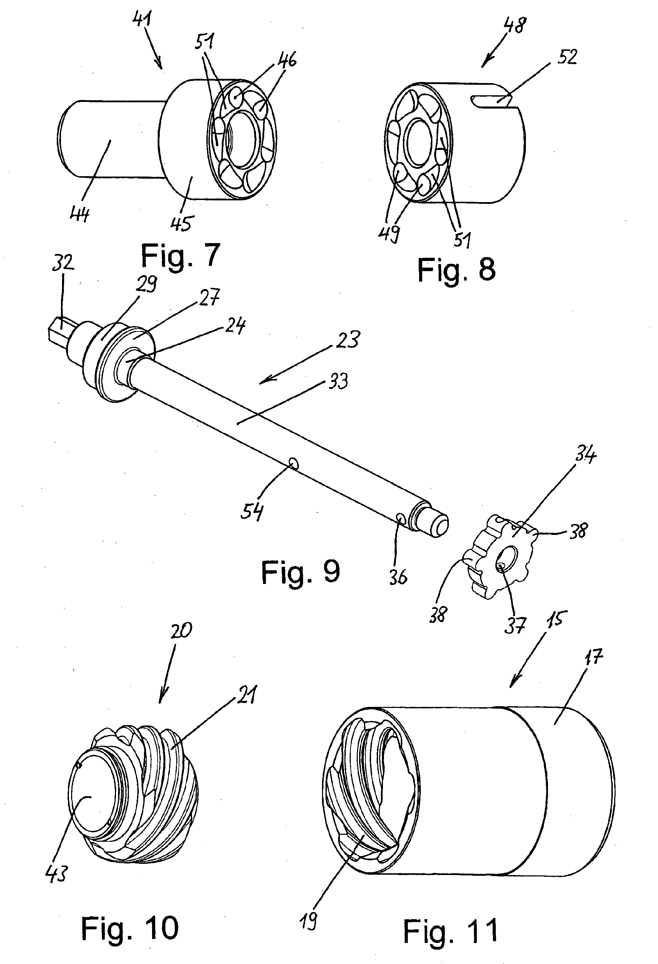

Das Antriebselement 15 ist in Einzeldarstellung in Figur 11 dargestellt. Wie bereits ausgeführt, ist das Antriebselement 15 hülsen- oder rohrförmig, d.h. hohlzylindrisch. Ein Endabschnitt 17 des Antriebselements 15 ist, wie aus Figur 3 ersichtlich, in eine Bohrung 18 der Traverse 5 eingesetzt und fest mit dieser, beispielsweise mittels Gewinde, Presssitz und/oder durch Klebung, verbunden. Die Bohrung 18 ist koaxial zur Gewindebohrung der Traverse 5, die das Innengewinde 9 trägt, weist jedoch einen größeren Durchmesser auf.

Am gegenüberliegenden Ende weist das Antriebselement 15 ein Innengewinde 19 auf. Dieses Innengewinde 19 ist derart ausgebildet und weist eine derartige Steigung auf, dass ein in das Antriebselement 15 eingesetztes, schneckenförmiges Abtriebselement 20 (Figur 10), das ein mit dem Innengewinde 19 kämmendes Außengewinde 21 aufweist, um eine Achse 22 gedreht wird, wenn das Antriebselement 15 in seiner Längsrichtung, d.h. in Richtung der Achse 22, verschoben wird. Bei der Kombination aus Antriebselement 19 und Abtriebselement 20 handelt es sich somit um einen Bewegungswandler, der eine translatorische bzw. Schiebebewegung des Antriebselements 15 in eine Rotationsbewegung des Abtriebselements 20 umwandelt.

Der Innendurchmesser des Antriebselements 15 im Bereich des Endabschnitts 17 bis hin zum Innengewinde 19 ist größer als der Außendurchmesser der Stellspindel 10. Die Stellspindel 10 kann sich daher in ihrer zurückgeschraubten Stellung, die in Figur 3 dargestellt ist, relativ weit in das Antriebselement 15 hinein erstrecken und sich relativ zum Antriebselement 15 drehen, ohne dieses zu berühren.

Innerhalb der Stellspindel 10 und des Antriebselements 15 ist der überwiegende Teil des Nachstellers 16 angeordnet, der im Folgenden näher beschrieben wird.

Der Nachsteller 16 umfasst als zentrales Dreh- und Lagerteil eine Welle 23, die in Figur 9 einzeln dargestellt ist. Die Welle 23 ist mittels eines zylindrischen Lagerbunds 24 drehbar und mit etwas Radialspiel in einer Lagerscheibe 25 (Figur 6) gelagert, die mittels eines Gewindeabschnitts 26 in den Bremssattel 1 eingeschraubt und dadurch in diesem festgelegt ist. Die Lagerscheibe 25 dient damit zur Fixierung der Welle 23 und damit des Nachstellers 16 am Bremssattel 1. An den Lagerbund 24 schließt ein weiterer Lagerbund 27 größeren Durchmessers an, der die Lagerscheibe 25 bzw. einen dazwischen angeordneten Gleitring 28 rückseitig überlappt und damit für eine Axialfixierung der Welle 23 in einer Richtung sorgt.

An den Gleitring 28 schließt sich rückseitig ein Antriebsbund 29 an. Auf diesem Antriebsbund 29 ist, wie lediglich in den Figuren 2 und 3 dargestellt, ein Antriebsritzel 30 drehfest befestigt. Das Antriebsritzel 30 treibt eine quer verlaufende Kette 31 an, welche die Drehbewegung der Welle 23 auf die hierzu parallele Welle 23a der Stellspindel 10a überträgt.

Das hintere Ende 32 der Welle 23 ist derart ausgebildet, dass ein Werkzeug, insbesondere ein Schraubenschlüssel, angesetzt werden kann, um die Welle 23 bei einem Belagwechsel manuell drehen zu können. Im gezeigten Ausführungsbeispiel ist das hintere Ende 32 sechskantförmig ausgebildet.

Vom Lagerbund 24 erstreckt sich ein längerer Wellenabschnitt 33 nach vorne. In der Nähe des vorderen Endes der Welle 23 ist eine Mitnehmerscheibe 34 dreh- und verschiebefest an der Welle 23 befestigt. Dies erfolgt beispielsweise mittels eines Querstifts 35 (Figuren 3 und 5), der sich durch eine Querbohrung 36 in der Welle 23 hindurch erstreckt und sich in eine entsprechende Querbohrung 37 in der Mitnehmerscheibe 34 hinein erstreckt. Eine Drehung der Welle 23 führt damit zu einer entsprechenden Drehung der Mitnehmerscheibe 34.

Die Mitnehmerscheibe 34 weist an ihrem Außenumfang eine Mehrzahl, im vorliegenden Ausführungsbeispiel fünf, sich radial nach außen erstreckende Radialvorsprünge 38 auf, die über ihren Umfang regelmäßig verteilt angeordnet sind. Diese Radialvorsprünge 38 greifen in entsprechend geformte Längsnuten 39 auf der Innenseite der Stellspindel 10 ein, die sich vom hinteren Ende der Stellspindel 10 über einen großen Teil ihrer Länge nach vorne erstrecken. Die Radialvorsprünge 38 sind in diesen Längsnuten 39 axial verschiebbar, sorgen jedoch gleichzeitig für eine drehfeste Kopplung zwischen Welle 23 und Stellspindel 10.

Wird die Welle 23 gedreht, wird somit über die Mitnehmerscheibe 34 auch die Stellspindel 10 gedreht. Je nach Drehrichtung wird damit die Stellspindel 10 nach vorne, d.h. in Richtung Bremsscheibe, oder nach hinten, relativ zur Traverse 5, geschraubt, wobei jedoch die Axialposition der Welle 23 innerhalb des Bremssattels 1 unverändert bleibt.

Die Drehbewegung der Welle 23 wird, wie bereits ausgeführt, durch eine translatorische Bewegung des mit der Traverse 5 fest verbundenen Antriebselements 15 bewirkt, das über sein Innengewinde 19 das Abtriebselement 20 in Umdrehung versetzen kann. Hierzu sitzt das Abtriebselement 20 auf einem Freilauf 40, der wiederum auf einer Kupplungsbuchse 41 angeordnet ist. Die Kupplungsbuchse 41 ist wiederum mittels zweier Lager 42a, 42b drehbar auf der Welle 23 gelagert.

Der Freilauf 40 ist in bekannter Weise so ausgebildet, dass er eine Drehbewegung des äußeren Teils in der einen Drehrichtung auf das innere Teil überträgt, während eine Drehbewegung in der anderen Drehrichtung nicht übertragen wird. Wird im vorliegenden Fall das schneckenförmige Abtriebselement 20 bei einem Vorwärtshub der Traverse 5 derart vom Antriebselement 15 angetrieben, dass sich das Abtriebselement 20 im Uhrzeigersinn dreht, so wird die Kupplungsbuchse 41 in dieser Drehrichtung über den Freilauf 40 mit gedreht. Wird dagegen das Abtriebselement 20 bei einem Rückwärtshub der Traverse 5 im Gegenuhrzeigersinn gedreht, so erfolgt über den Freilauf 40 eine Entkopplung der Drehkraft zur Kupplungsbuchse 41, d.h. die Kupplungsbuchse 41 dreht sich nicht mit.

Im Übrigen ist der Freilauf 40 hohlzylinderförmig ausgebildet und in eine axiale Durchgangsbohrung 43 (Figur 10) des Abtriebselements 20 eingesetzt.

Die Kupplungsbuchse 41 ist in Figur 7 einzeln dargestellt. Sie weist einen hinteren zylindrischen Abschnitt 44 mit verringertem Durchmesser und einen vorderen Abschnitt 45 mit vergrößertem Durchmesser auf. Auf dem hinteren Abschnitt 44 ist der Freilauf 40 aufgesetzt. Die Durchmesserstufe zwischen den Abschnitten 44, 45 dient als Axialanschlag für den Freilauf 40. An der vorderen Stirnfläche weist die Kupplungsbuchse 41 mehrere, in Umfangsrichtung verteilte, kalottenförmige Vertiefungen 46 auf, die als Kugelsitze für Kugeln 47 dienen.

In Axialrichtung vor der Kupplungsbuchse 41 ist ein Kupplungsring 48 längs verschiebbar auf der Welle 23 gelagert. Dieser Kupplungsring 48 weist auf seiner der Kupplungsbuchse 41 zugewandten Stirnseite entsprechende kalottenförmige Vertiefungen 49 auf, die ebenfalls als Kugelsitze für die Kugeln 47 ausgebildet sind.

Kupplungsbuchse 41, Kugeln 47 und Kupplungsring 48 sind Teile einer Kugelrampenkupplung 59, die ausgebildet ist, einerseits bei einer erforderlichen Nachstellung der Stellspindel 10 das hierzu erforderliche Drehmoment in Nachstell-Drehrichtung auf die Welle 23 und damit auf die Stellspindel 10 zu übertragen, und andererseits, wie später noch näher beschrieben wird, ein manuelles Zurückdrehen der Stellspindel 10 mittels der Welle 23 zum Zweck eines Bremsbelagwechsels zu ermöglichen.

Der Kupplungsring 48 ist mittels einer Feder 50 in Richtung Kupplungsbuchse 41 vorgespannt. Die Feder 50 umgibt die Welle 23 und ist mit ihrem vorderen Ende an der Mitnehmerscheibe 34 und mit ihrem hinteren Ende am Kupplungsring 48 abgestützt. Mittels der Feder 50 wird der Kupplungsring 48 mit einer derartigen Axialkraft in Richtung Kupplungsbuchse 41 gedrückt, dass die dazwischenliegenden Kugeln 47, die in den kalottenförmigen Vertiefungen 46, 49 liegen, das beim Nachstellvorgang auftretende, im Uhrzeigersinn wirkende Drehmoment übertragen können.

Kommen während des Zuspannvorgangs die Bremsbeläge 13, 13a mit der Bremsscheibe in Eingriff, steigt das Nachstellmoment entsprechend an. Bei Erreichen des maximalen Nachstellmoments von 5 bis 10 Nm erreicht die Axialkraft, die vom Innengewinde 19 des Antriebselement 15 auf das Außengewinde 21 des Abtriebselements 20 übertragen wird, die Höhe der Federkraft, mit der die Feder 50 den Kupplungsring 48 gegen die Kugeln 47 drückt. Wird die Traverse 5 und damit das Antriebselement 15 weiter in Zuspannrichtung, d.h. in Richtung der Bremsscheibe, verschoben, werden Abtriebselement 20, Freilauf 40, Kupplungsbuchse 41, Kugeln 47 und Kupplungsring 48 axial auf der Welle 23 unter Zusammendrücken der Feder 50 in Richtung Bremsscheibe und damit relativ zur Stellspindel 10 verschoben, ohne dass diese Bauteile eine Drehbewegung, d.h. Nachstellbewegung, ausführen. Somit ist die unter Last erfolgende Dreh-Abschaltung des Nachstellers 16 realisiert, ohne dass die Kugelrampenkupplung auslöst, d.h. ohne dass es zu einer Drehbewegung der Kupplungsbuchse 41 relativ zum Kupplungsring 48 kommt. Die Kugelrampenkupplung wird damit nicht zur Lastabschaltung benötigt, so dass sie aufgrund der Lastabschaltung des Nachstellers 16 keinerlei Verschleiß unterworfen ist.

Muss dagegen die Welle 23 manuell für einen Bremsbelagwechsel zurückgedreht werden, ist es erforderlich, dass sich der Kupplungsring 48 zusammen mit der Welle 23 relativ leicht relativ zur Kupplungsbuchse 41 drehen lässt. Andernfalls würde es zu Verspannungen zwischen dem Abtriebselement 20 und dem Antriebselement 15 kommen bzw. ein Zurückdrehen der Welle 23 nicht möglich sein. Hierzu weisen sowohl Kupplungsbuchse 41 als auch Kupplungsring 48 schräge Kugelrampen 51 auf, die sich, ausgehend von den kalottenförmigen Vertiefungen 46, 49, gleichsinnig in Umfangsrichtung erstrecken. Diese schrägen Kugelrampen 51 erleichtern das Herausbewegen der Kugeln 47 aus den Vertiefungen 46, 49 in einer Drehrichtung. Dabei wird durch die formschlüssige Verbindung zwischen der Welle 23 und dem Kupplungsring 48 ein Moment auf die Kupplung 59 ausgeübt. Durch die Sperrwirkung des Freilaufs 40 in dieser Drehrichtung beginnt die Kupplung 59 ab einem eingestellten Moment, abhängig von der Kraft der Feder 50, überzuspringen. Dieses Moment ist identisch mit dem notwendigen Rückdrehmoment der Stellspindeln 10, 10a.

Zur drehfesten, jedoch axial verschiebbaren Verbindung mit der Welle 23 weist der Kupplungsring 48 einen Querspalt 52 (Figur 8) auf, in die ein in der Welle 23 fixierter Querstift 53 hineinragt. Der Querstift 53 ist in einer Querbohrung 54 (Figur 9) des Wellenabschnitts 33 festgesetzt.

Es muss ferner ausgeschlossen werden, dass bereits zu Beginn eines Bremsvorgangs, wenn die Traverse 5 denjenigen Leerhub durchfährt, der dem vorbestimmten Lüftspiel zwischen Bremsscheibe und Bremsbelägen 13, 13a entspricht, die Stellspindel 10 mittels der Verschleißnachstellvorrichtung gedreht und damit weiter aus der Traverse 5 hinausgeschraubt wird. Die Drehung der Stellspindel 10 darf erst erfolgen, wenn der vorbestimmte Leerhub durchfahren ist, die Bremsbeläge 13, 13a jedoch noch nicht an der Bremsscheibe anliegen. Hierzu ist zwischen dem Innengewinde 19 des Antriebselements 15 und dem Außengewinde 21 des Abtriebselements 20 ein Axialspiel 1 vorgesehen, das dem gewünschten Leerhub bzw. Lüftspiel entspricht. Das Antriebselement 15 kann daher, ausgehend von der in Figur 3 gezeigten hintersten Stellung, zunächst über den Leerhub in Richtung Bremsscheibe, d.h. in Figur 3 nach rechts, verfahren werden, bevor das Antriebselement 15 beginnt, das Abtriebselement 20 und damit die Stellspindel 10 zu drehen.

Aus Figur 3 ist weiterhin ersichtlich, dass im Bereich des hinteren Endes des Antriebselements 15 und des Abtriebselements 20 eine axial wirkende Feder 55 vorgesehen ist, die im Ausführungsbeispiel als Tellerfeder ausgebildet ist. Die Feder 55 ist einerseits am hinteren Ende des Antriebselements 15 und andererseits, wie genauer aus Figur 6 ersichtlich, an einem Anschlagring 56 abgestützt, der in einer Umfangsnut des Abtriebselements 20 eingesetzt ist. Befindet sich das Antriebselement 15, wie in Figur 3 dargestellt, in seiner hinteren Stellung, wird eine axiale Federkraft und damit eine Reibkraft zwischen Antriebselement 15 und Abtriebselement 20 erzeugt, die ein unbeabsichtigtes Verdrehen des Abtriebselements 20, beispielsweise verursacht durch Stöße oder Erschütterungen, bei unbetätigter Bremse verhindert. Wird dagegen die Bremse betätigt, und das Antriebselement 15 von der Traverse 5 über das Axialspiel 1, d.h. über den Leerhub, in Richtung Bremsscheibe bewegt, wird die Feder 55 entspannt, so dass sich das Abtriebselement 20 ohne Behinderung durch die Feder 55 relativ zum Antriebselement 15 drehen kann.

Im Folgenden wird die Funktionsweise der Verschleißnachstellvorrichtung bei Betätigen der Bremse näher erläutert. Wird bei einem Bremsvorgang die Traverse 5 mittels des Drehhebels 2 in Richtung Bremsscheibe bewegt, durchfährt die Stellspindel 10 zunächst rotationslos zusammen mit dem Antriebselement 15 den Leerhub, der dem gewünschten Lüftspiel entspricht. Aufgrund des Axialspiels 1 zwischen Antriebselement 15 und Abtriebselement 20 erfolgt während des Leerhubs noch keine Drehung des Abtriebselements 20 und damit der Stellspindel 10. Es wird lediglich die hintere Feder 55 entspannt. Ist der vorbestimmte Leerhub durchfahren und liegen die Bremsbeläge 13, 13a noch nicht an der Bremsscheibe an, führt die weitere Axialverschiebung der Traverse 5 und damit des Antriebselements 15 zu einem Drehen des Abtriebselements 20 im Uhrzeigersinn um die Achse 22. Da der Freilauf 40 in dieser Drehrichtung sperrt, wird die Drehbewegung auf die Kupplungsbuchse 41 und von dieser über die Kugeln 47 auf den Kupplungsring 48 übertragen. Da der Kupplungsring 48 drehfest mit der Welle 23 verbunden ist, wird auch die Welle 23 und damit die Mitnehmerscheibe 34 mit gedreht. Die Mitnehmerscheibe 34 dreht die Stellspindel 10 im Uhrzeigersinn mit und schraubt diese weiter nach vorne aus der Traverse 5 hinaus. Hierdurch werden die Druckstücke 12 und damit die Bremsbeläge 13, 13a an die Bremsscheibe angenähert, bis sie an dieser anliegen.

Wie aus Figur 2 ersichtlich, wird die Drehung der Welle 23 über die Kette 31 auf die zweite Welle 23a übertragen. Diese weist an ihrem vorderen Ende ebenfalls eine drehfest mit ihr verbundene Mitnehmerscheibe 34a auf, die in gleicher Weise, wie anhand der Mitnehmerscheibe 34 beschrieben, drehfest, jedoch axial verschiebbar mit der zweiten Spindel 10a gekoppelt ist. Ein Drehen der Welle 23a im Uhrzeigersinn bewirkt damit ein entsprechendes Nachstellen auch der zweiten Stellspindel 10a und damit des zweiten Druckstücks 12a.

Wird die Bremse nach erfolgte Bremsung wieder gelöst, dreht das Antriebselement 15 zwar beim Rückwärtshub nach Durchfahren des Axialspiels 1 das Abtriebselement 20 im Gegenuhrzeigersinn, jedoch wird diese Drehbewegung aufgrund des in dieser Richtung entsperrten Freilaufs nicht auf die Stellspindeln 10, 10a übertragen, so dass deren Position relativ zur Traverse 5 unverändert bleibt. In der Endposition drückt das Antriebselement 15 die Feder 55 gegen den Anschlagring 56, wodurch eine stabile Position zwischen Antriebselement 15 und Abtriebselement 20 sichergestellt wird.

Zum Belagswechsel werden die Stellspindeln 10, 10a über die Wellen 23, 23a manuell zurückgeschraubt. Hierzu kann ein Schraubenschlüssel verwendet werden, der an den hinteren Enden 32, 32a der Wellen 23, 23a angesetzt wird. Dabei wird zwischen dem Antriebselement 15 und dem Abtriebselement 20 ein Flankenwechsel vollzogen. Dies hat zur Folge, dass beim ersten Bremsvorgang nach dem Belagswechsel die Bremse keinen Leerhub bzw. kein Lüftspiel mehr hat. Der Leerhub und das korrekte Lüftspiel der Bremse stellt sich jedoch sofort beim ersten Betätigen des Nachstellers 16 ein.

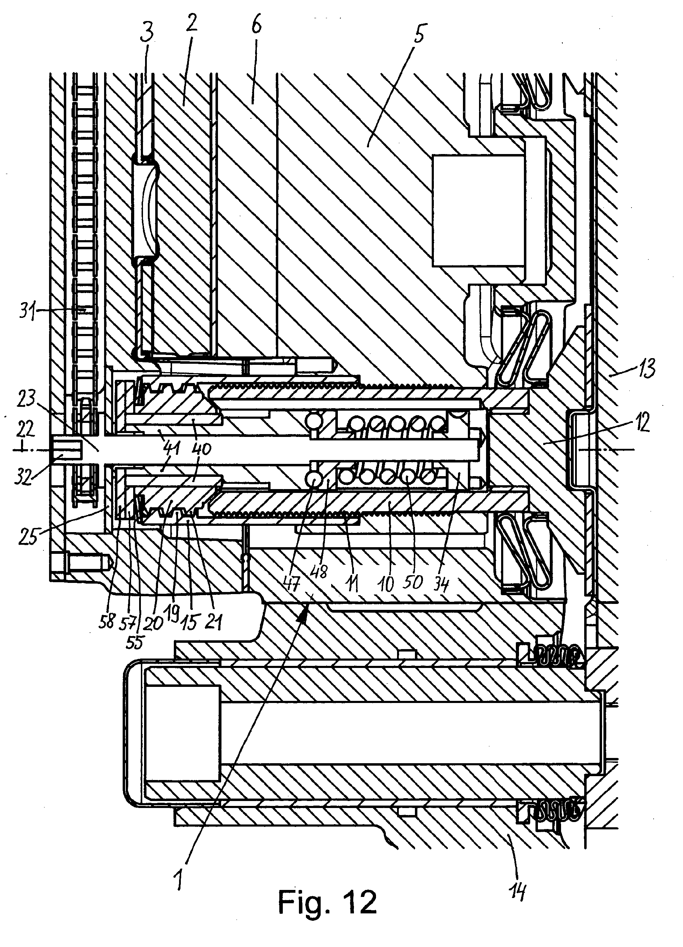

Anhand von Figur 12 wird im Folgenden ein zweites Ausführungsbeispiel der erfindungsgemäßen Verschleißnachstellvorrichtung beschrieben. Diese zweite Ausführungsform arbeitet weitgehen in derselben Weise wie die erste Ausführungsform und unterscheidet sich von dieser lediglich in der Drehverhinderungseinrichtung, d.h. in dem Detail, wie das Abtriebselement 20 bei Nichtbetätigen der Bremse stabil relativ zum Antriebselement 15 gehalten wird.

Anstelle des Anschlagrings 56 ist bei der zweiten Ausführungsform das Abtriebselement 20 an seinem hinteren Ende drehfest mit einer ersten Reibscheibe 57 verbunden. Eine zweite Reibscheibe 58 ist drehfest am hinteren Ende der Kupplungsbuchse 41 befestigt. Die zweite Reibscheibe 58 ist unmittelbar hinter der ersten Reibscheibe 57 und zwischen dieser und der Lagerscheibe 25 angeordnet.

Die an der hinteren Stirnseite des Antriebselements 15 anliegende Feder 55 stützt sich nach hinten an der ersten Reibscheibe 57 ab, die mit dem Abtriebselement 20 fest verbunden ist. Bei unbetätigter Bremse wird somit die erste Reibscheibe 57 mittels der Feder 55 nach hinten gegen die zweite Reibscheibe 58 gedrückt, die aufgrund der Axialkraft und der damit verbundenen erhöhten Reibung am Verdrehen gehindert wird. Die beiden Reibscheiben 57, 58 sorgen damit für eine stabile Position der Kupplungsbuchse 41 und des Abtriebselements 20 sorgen.

Führt die Traverse 5 mit dem damit verbundenen Antriebselement 15 eine Hubbewegung in Richtung Bremsscheibe aus, wird wiederum aufgrund des Axialspiels zwischen Antriebselement 15 und Abtriebselement 20 der Leerhub durchfahren, ohne eine Wirkung auf das Abtriebselement auszuüben. Durch die Hubbewegung des Antriebselements 15 wird jedoch die Feder 55 (Tellerfeder) entspannt und die axiale Pressung der beiden Reibscheiben 57, 58 abgebaut, wodurch ein Verdrehen und Nachstellen der Stellspindeln 10, 10a ermöglicht wird, wie anhand des ersten Ausführungsbeispiels beschrieben.

Beim Rückhub der Traverse 5 durchfährt das Antriebselement 15 zunächst den Leerhub, dreht anschließend das Abtriebselement 20 auf dem in dieser Richtung entsperrten Freilauf 40 und drückt in seiner Endposition die Feder 55 gegen die erste Reibscheibe 57, was zu einem Zusammendrücken der beiden Reibscheiben 57, 58 führt.

Im Rahmen der Erfindung sind eine Vielzahl von Variationen möglich. Beispielsweise ist es möglich, das Axialspiel 1 nicht im Bereich des Gewindes zwischen Antriebselement 15 und Abtriebselement 20 vorzusehen, sondern durch eine entsprechende beschränkte Verschiebbarkeit des Antriebselements 15 relativ zur Traverse 5 um das Maß des Leerhubs. Weiterhin könnte auch das Abtriebselement 20 ein entsprechendes Axialspiel auf dem Freilauf 40 haben. Anstelle eines Gewindes zwischen Antriebselement 15 und Abtriebselement 20 kann auch eine Schrägverzahnung vorgesehen werden. Weiterhin ist die erfindungsgemäße Verschleißnachstellvorrichtung nicht nur bei Scheibenbremsen mit zwei Stellspindeln 10, 10a einsetzbar, sondern auch bei Scheibenbremsen mit lediglich einer Stellspindel oder solchen mit mehr als zwei Stellspindeln. Die Betätigung der Scheibenbremse kann sowohl pneumatisch, hydraulisch als auch elektrisch erfolgen. Die Verschleißnachstellvorrichtung kann auch bei Scheibenbremsen eingesetzt werden, bei denen die Traverse 5 nicht über einen Drehhebel 2, sondern direkt von einem Aktuator betätigt wird.

Anstelle einer Kugelrampenkupplung sind auch andere Arten von Kupplungen denkbar, die in einer Drehrichtung für eine drehfeste Verbindung sorgen, während sie in der anderen Drehrichtung die Drehverbindung lösen. Beispielsweise könnte die Kupplung als in einer Drehrichtung sperrender Freilauf ausgebildet sein. Anstelle von Kugeln könnten andere Wälzelemente, beispielsweise Rollen eingesetzt sein. Weiterhin sind auch Schrägverzahnungen zwischen Kupplungsbuchse und Kupplungsring denkbar, die in einer Drehrichtung sperren, in der anderen Drehrichtung jedoch aufeinander abgleiten.

## Patentansprüche

1. Verschleiß-Nachstellvorrichtung für eine Scheibenbremse, die eine Zuspanneinrichtung aufweist, die eine relativ zu einem Bremssattel (1) verschiebbare Traverse (5) und mindestens eine mit der Traverse (5) gekoppelte Stellspindel (10, 10a) umfasst, die beim Bremsen einen Bremsbelag (13, 13a) in Richtung der Bremsscheibe drückt, wobei die Verschleiß-Nachstellvorrichtung einen Stellspindel-Drehantrieb zum Drehen der Stellspindel (10) relativ zur Traverse (5) aufweist, der ein Antriebselement (15) und ein mit diesem zusammenwirkendes, um die Drehachse (22) der Stellspindel (10) drehbares und mit der Stellspindel (10) in zumindest einer Drehrichtung drehgekoppeltes Abtriebselement (20) umfasst, **dadurch gekennzeichnet, dass** das Antriebselement (15) des Stellspindel-Drehantriebs mit der Traverse (5) gekoppelt und von der Traverse (5) verschiebbar ist, wobei das Antriebselement (15) mit dem Abtriebselement (20) derart zusammenwirkt, dass die Schiebebewegung des Antriebselements (15) eine Drehbewegung des Abtriebselements (20) erzeugt.

2. Verschleiß-Nachstellvorrichtung nach Anspruch 1, **dadurch gekennzeichnet, dass** sowohl das Antriebselement (15) als auch das Abtriebselement (20) koaxial zur Stellspindel (10) angeordnet sind.

3. Verschleiß-Nachstellvorrichtung nach Anspruch 1 oder 2, **dadurch gekennzeichnet, dass** das Antriebselement (15) als Hülse ausgebildet ist, die das Abtriebselement (20) übergreift.

4. Verschleiß-Nachstellvorrichtung nach einem der vorhergehenden Ansprüche, **dadurch gekennzeichnet, dass** das Abtriebselement (20) zumindest überwiegend innerhalb des Antriebselements (15) angeordnet ist.

5. Verschleiß-Nachstellvorrichtung nach einem der vorhergehenden Ansprüche, **dadurch gekennzeichnet, dass** das Antriebselement (15) ein Innengewinde (19) oder eine Schrägverzahnung aufweist, das bzw. die mit einem Außengewinde (21) oder einer Schrägverzahnung des Abtriebselements (20) zusammenwirkt.

6. Verschleiß-Nachstellvorrichtung nach Anspruch 5, **dadurch gekennzeichnet, dass** das Abtriebselement (20) ein äußeres Schneckengewinde aufweist.

7. Verschleiß-Nachstellvorrichtung nach einem der vorhergehenden Ansprüche, **dadurch gekennzeichnet, dass** sie einen Freilauf (40) aufweist, auf den das Abtriebselement (20) gelagert ist, eine Kupplungsbuchse (41), auf welcher der Freilauf (40) gelagert ist, wobei das Abtriebselement (20) über den Freilauf (40) mit der Kupplungsbuchse (41) in einer Drehrichtung drehfest und in der anderen Drehrichtung drehbar verbunden ist, und eine im Bremssattel (1) drehbar gelagerte Welle (23), auf der die Kupplungsbuchse (41) gelagert ist und die drehfest, aber axial verschiebbar mit der Stellspindel (10) verbunden ist.

8. Verschleiß-Nachstellvorrichtung nach einem der vorhergehenden Ansprüche, **dadurch gekennzeichnet, dass** das Antriebselement (15) dreh- und verschiebefest mit der Traverse (5) verbunden ist und zwischen Antriebselement (15) und Abtriebselement (20) ein Axialspiel (1) vorgesehen ist, das dem gewünschten Lüftspiel der Scheibenbremse entspricht.

9. Verschleiß-Nachstellvorrichtung nach einem der Ansprüche 1 bis 7, **dadurch gekennzeichnet, dass** das Antriebselement (15) über eine Strecke, die dem gewünschten Lüftspiel der Scheibenbremse entspricht, begrenzt axial verschiebbar an der Traverse (5) befestigt ist.

10. Verschleiß-Nachstellvorrichtung nach Anspruch 7, **dadurch gekennzeichnet, dass** Abtriebselement (20) über eine Strecke, die dem gewünschten Lüftspiel der Scheibenbremse entspricht, begrenzt axial verschiebbar auf dem Freilauf (40) befestigt ist.

11. Verschleiß-Nachstellvorrichtung nach einem der Ansprüche 7 bis 10, **dadurch gekennzeichnet, dass** die Kupplungsbuchse (41) und ein koaxialer, drehfest auf der Welle (23) angeordneter Kupplungsring (48) Teile einer Kupplung sind, die bei einer Drehbewegung in Zuspannrichtung ein höheres Drehmoment übertragen kann als bei der entgegengesetzten Drehbewegung.

12. Verschleiß-Nachstellvorrichtung nach Anspruch 11, **dadurch gekennzeichnet, dass** die Kupplung als Kugelrampenkupplung (59) ausgebildet ist.

13. Verschleiß-Nachstellvorrichtung nach Anspruch 12, **dadurch gekennzeichnet, dass** die Kupplungsbuchse (41) Kugelsitzflächen in der Form von kalottenförmigen Vertiefungen (46) aufweist, von denen sich schräge Kugelrampen (51) ausschließlich einsinnig in Umfangsrichtung erstrecken.

14. Verschleiß-Nachstellvorrichtung nach Anspruch 12 oder 13, **dadurch gekennzeichnet, dass** der Kupplungsring (48) Kugelsitzflächen in der Form von kalottenförmigen Vertiefungen (49) aufweist, von denen sich schräge Kugelrampen (51) ausschließlich einsinnig in Umfangsrichtung erstrecken.

15. Verschleiß-Nachstellvorrichtung nach einem der Ansprüche 11 bis 14, **dadurch gekennzeichnet, dass** der Kupplungsring (48) axial verschiebbar auf der Welle (23) angeordnet und in Richtung Kupplungsbuchse (41) mittels einer Feder (50) vorgespannt ist.

16. Verschleiß-Nachstellvorrichtung nach Anspruch 15, **dadurch gekennzeichnet, dass** die Feder (50) an einer dreh- und verschiebefest mit der Welle (23) verbundenen Mitnehmerscheibe (34) abgestützt ist, die drehfest, aber axial verschiebbar mit der Stellspindel (10) gekoppelt ist.

17. Verschleiß-Nachstellvorrichtung nach einem der Ansprüche 11 bis 16, **dadurch gekennzeichnet, dass** die Kugelrampenkupplung innerhalb der Stellspindel (10) angeordnet ist.

18. Verschleiß-Nachstellvorrichtung nach einem der Ansprüche 15 bis 17, **dadurch gekennzeichnet, dass** die Kupplungsbuchse (41) und der Kupplungsring (48) axial verschiebbar auf der Welle (23) angeordnet und von der Feder (50) mit einer Federkraft abgestützt sind, die derart bemessen ist, dass bei Erreichen eines bestimmten maximalen Nachstellmoments die vom Antriebselement (15) auf das Abtriebselement (20) aufgebrachte Axialkraft die Höhe der Federkraft erreicht, so dass beim weiteren Verschieben des Antriebselements (15) das Abtriebselement (20), der Freilauf (40), die Kupplungsbuchse (41) und der Kupplungsring (48) rotationsfrei gegen die Feder (50) verschoben werden.

19. Verschleiß-Nachstellvorrichtung nach einem der vorhergehenden Ansprüche, **dadurch gekennzeichnet, dass** zwischen Antriebselement (15) und Abtriebselement (20) eine Drehverhinderungseinrichtung vorgesehen ist, die bei unbetätigter Scheibenbremse eine Drehung des Abtriebselements (20) sperrt.

20. Verschleiß-Nachstellvorrichtung nach Anspruch 19, **dadurch gekennzeichnet, dass** die Drehverhinderungseinrichtung aus einer einerseits am Abtriebselement (20) und andererseits am Antriebselement (15) abgestützten und im ungebremsten Zustand der Scheibenbremse unter Vorspannung stehenden Feder (55) besteht.

## Claims

1. Slack adjuster for a disc brake which comprises an application device comprising a cross member (5) which can be displaced relative to a brake caliper (1), and at least one adjustment spindle (10, 10a) which is coupled to the cross member (5) and presses a brake pad (13, 13a) towards the brake disc when braking, the slack adjuster comprising an adjustment-spindle rotary drive for rotating the adjustment spindle (10) relative to the cross member (5), which drive comprises a drive element (15) and a driven element (20) which is rotatably coupled to the adjustment spindle (10) in at least one rotational direction, is rotatable about the rotary shaft (22) of the adjustment spindle (10) and cooperates with said drive element, **characterised in that** the drive element (15) of the adjustment-spindle rotary drive is coupled to the cross member (5) and can be displaced by the cross member (5), the drive element (15) cooperating with the driven element (20) such that the sliding movement of the drive element (15) produces a rotational movement of the driven element (20).

2. Slack adjuster according to claim 1, **characterised in that** both the drive element (15) and the driven element (20) are coaxial with the adjustment spindle (10).

3. Slack adjuster according to either claim 1 or claim 2, **characterised in that** the drive element (15) is formed as a sleeve which overlaps the driven element (20).

4. Slack adjuster according to any of the preceding claims, **characterised in that** the driven element (20) is arranged at least predominantly within the drive element (15).

5. Slack adjuster according to any of the preceding claims, **characterised in that** the drive element (15) has an internal thread (19) or a helical gear, cooperating with an external thread (21) or with a helical gear of the driven element (20) respectively.

6. Slack adjuster according to claim 5, **characterised in that** the driven element (20) comprises an outer worm thread.

7. Slack adjuster according to any of the preceding claims, **characterised in that** it comprises a free-wheel (40) on which the driven element (20) is mounted, a coupling bushing (41) on which the free-wheel (40) is mounted, the driven element (20) being connected to the coupling bushing (41) via the free-wheel (40) for conjoint rotation therewith in one rotational direction and being rotatably connected in the other rotational direction, and a shaft (23) which is rotatably mounted in the brake caliper (1), on which shaft the coupling bushing (41) is mounted and which shaft is connected to the adjustment spindle (10) for conjoint rotation therewith but in an axially displaceable manner.

8. Slack adjuster according to any of the preceding claims, **characterised in that** the drive element (15) is connected to the cross member (5) for conjoint rotation therewith and in a non-displaceable manner and an axial clearance (1) is provided between the drive element (15) and the driven element (20) and corresponds to the desired clearance of the disc brake.

9. Slack adjuster according to any of claims 1 to 7, **characterised in that** the drive element (15) is fastened to the cross member (5) with limited axial displacement over a distance which corresponds to the desired clearance of the disc brake.

10. Slack adjuster according to claim 7, **characterised in that** the driven element (20) is fastened to the free-wheel (40) with limited axial displacement over a distance which corresponds to the desired clearance of the disc brake.

11. Slack adjuster according to any of claims 7 to 10, **characterised in that** the coupling bushing (41) and a coaxial coupling ring (48), which is arranged on the shaft (23) for conjoint rotation therewith, are parts of a clutch which can transmit a higher torque during a rotational movement in the application direction than during the rotational movement in the opposite direction.

12. Slack adjuster according to claim 11, **characterised in that** the clutch is formed as a ball ramp clutch (59).

13. Slack adjuster according to claim 12, **characterised in that** the coupling bushing (41) comprises ball seats in the form of dome-shaped indentations (46), from which oblique ball ramps (51) extend in the circumferential direction in only one direction.

14. Slack adjuster according to either claim 12 or claim 13, **characterised in that** the coupling ring (48) comprises ball seats in the form of dome-shaped indentations (49), from which oblique ball ramps (51) extend in the circumferential direction in only one direction.

15. Slack adjuster according to any of claims 11 to 14, **characterised in that** the coupling ring (48) is arranged axially displaceably on the shaft (23) and is biased in the direction of the coupling bushing (41) by means of a spring (50).

16. Slack adjuster according to claim 15, **characterised in that** the spring (50) is supported on a clutch plate (34) which is connected to the shaft (23) for conjoint rotation therewith and in a non-displaceable manner, which clutch plate is coupled to the adjustment spindle (10) for conjoint rotation therewith but in an axially displaceable manner.

17. Slack adjuster according to any of claims 11 to 16, **characterised in that** the ball ramp clutch is arranged within the adjustment spindle (10).

18. Slack adjuster according to any of claims 15 to 17, **characterised in that** the coupling bushing (41) and the coupling ring (48) are arranged axially displaceably on the shaft (23) and are supported by the spring (50) with a spring force which is such that the axial force applied to the driven element (20) by the drive element (15) reaches the level of the spring force when a specific maximum adjustment moment is reached, such that when the drive element (15) is further displaced, the driven element (20), the free-wheel (40), the coupling bushing (41) and the coupling ring (48) are displaced against the spring (50) without rotation.

19. Slack adjuster according to any of the preceding claims, **characterised in that** a rotation prevention means is provided between the drive element (15) and the driven element (20) and blocks rotation of the driven element (20) when the disc brake is not actuated.

20. Slack adjuster according to claim 19, **characterised in that** the rotation prevention means consists of a spring (55) which is supported on the driven element (20) on one side and on the drive element (15) on the other side and is under bias when the disc brake is not being braked.

## Revendications

1. Dispositif de rattrapage d'usure pour un frein à disque, qui comprend un système de tensionnement qui inclut une traverse (5) déplaçable par rapport à un étrier de frein (1) et au moins une broche de positionnement (10, 10a) couplée avec la traverse (5), broche qui pousse lors du freinage une garniture de frein (13, 13a) en direction du disque de frein, dans lequel le dispositif de rattrapage d'usure comprend un entraînement rotatif de broche pour faire tourner la broche de positionnement (10) par rapport à la traverse (5), l'entraînement incluant un élément menant (15) et un élément mené (20) capable de tourner autour de l'axe de rotation (22) de la broche de positionnement (10) et couplé en rotation avec la broche de positionnement (10) dans au moins un sens de rotation, **caractérisé en ce que** l'élément menant (15) de l'entraînement rotatif de broche est couplé avec la traverse (5) et susceptible d'être déplacé en translation par la traverse (5), et l'élément menant (15) coopère avec l'élément mené (20) de telle façon que le déplacement en translation de l'élément menant (15) engendre un mouvement rotatif de l'élément mené (20).

2. Dispositif de rattrapage d'usure selon la revendication 1, **caractérisé en ce que** l'élément menant (15) tout comme l'élément mené (20) sont agencés coaxialement par rapport à la broche de positionnement (10).

3. Dispositif de rattrapage d'usure selon la revendication 1 ou 2, **caractérisé en ce que** l'élément menant (15) est réalisé sous forme de douille qui coiffe l'élément mené (20).

4. Dispositif de rattrapage d'usure selon l'une des revendications précédentes, **caractérisé en ce que** l'élément mené (20) est agencé au moins en majeure partie à l'intérieur de l'élément menant (15).

5. Dispositif de rattrapage d'usure selon l'une des revendications précédentes, **caractérisé en ce que** l'élément menant (15) comporte un pas de vis intérieur (19) ou une denture oblique qui coopère avec un pas de vis extérieur (21) ou une denture oblique de l'élément mené (20).

6. Dispositif de rattrapage d'usure selon la revendication 5, **caractérisé en ce que** l'élément mené (20) comporte un pas de vis sans fin extérieur.

7. Dispositif de rattrapage d'usure selon l'une des revendications précédentes, **caractérisé en ce qu'**il comprend une roue libre (40) sur laquelle est monté l'élément mené (20), un manchon d'accouplement (41) sur lequel est montée la roue libre (40), tel que l'élément mené (20) est relié avec le manchon d'accouplement (41) via la roue libre (40) solidairement en rotation dans un sens de rotation et capable de rotation dans l'autre sens de rotation, et un arbre (23) monté en rotation dans l'étrier de frein (1), arbre sur lequel est monté le manchon d'accouplement (41) et qui est relié solidairement en rotation mais avec possibilité de translation axiale avec la broche de positionnement (10).

8. Dispositif de rattrapage d'usure selon l'une des revendications précédentes, **caractérisé en ce que** l'élément d'entraînement (15) est relié solidairement en rotation et solidairement en translation avec la traverse (5), et **en ce qu'**il est prévu un jeu axial (1) entre l'élément menant (15) et l'élément mené (20), qui correspond au jeu de dégagement souhaité du frein à disque.

9. Dispositif de rattrapage d'usure selon l'une des revendications 1 à 7, **caractérisé en ce que** l'élément menant (15) est fixé sur la traverse (5) avec possibilité de translation axiale limitée à un trajet qui correspond au jeu de dégagement souhaité du frein à disque.

10. Dispositif de rattrapage d'usure selon la revendication 7, **caractérisé en ce que** l'élément mené (20) est fixé sur la roue libre (40) avec possibilité de translation axiale limitée à un trajet qui correspond au jeu de dégagement souhaité du frein à disque.

11. Dispositif de rattrapage d'usure selon l'une des revendications 7 à 10, **caractérisé en ce que** le manchon d'accouplement (41) et une bague d'accouplement (48) coaxiale, agencée solidairement en rotation sur l'arbre (23), font partie d'un accouplement qui, lors d'un mouvement rotatif dans la direction de tensionnement, est capable de transmettre un couple de rotation plus élevé que lors d'un mouvement rotatif en direction opposée.

12. Dispositif de rattrapage d'usure selon la revendication 11, **caractérisé en ce que** l'accouplement est réalisé sous forme d'accouplement à billes-et-rampes (59).

13. Dispositif de rattrapage d'usure selon la revendication 12, **caractérisé en ce que** le manchon d'accouplement (41) présente des surfaces de logement de billes sous la forme de renfoncements (46) en forme de calotte, depuis lesquels s'étendent des rampes à billes (51) obliques, exclusivement dans un seul sens en direction périphérique.

14. Dispositif de rattrapage d'usure selon la revendication 12 ou 13, **caractérisé en ce que** la bague d'accouplement (48) comporte des surfaces de logement de billes sous la forme de renfoncements (49) en forme de calotte, depuis lesquels s'étendent des rampes à billes (51) obliques, exclusivement dans un seul sens en direction périphérique.

15. Dispositif de rattrapage d'usure selon l'une des revendications 11 à 14, **caractérisé en ce que** la bague d'accouplement (48) est agencée avec possibilité de translation axiale sur l'arbre (23), et est précontrainte au moyen d'un ressort (50) en direction du manchon d'accouplement (41).

16. Dispositif de rattrapage d'usure selon la revendication 15, **caractérisé en ce que** le ressort (50) est soutenu sur un disque d'entraînement (34) relié solidairement en rotation et solidairement en translation avec l'arbre (23), disque qui est couplé solidairement en rotation mais avec possibilité de translation axiale avec la broche de positionnement (10).

17. Dispositif de rattrapage d'usure selon l'une des revendications 11 à 16, **caractérisé en ce que** l'accouplement à billes-et-rampes est agencé à l'intérieur de la broche de positionnement (10).

18. Dispositif de rattrapage d'usure selon l'une des revendications 15 à 17, **caractérisé en ce que** le manchon d'accouplement (41) et la bague d'accouplement (48) sont agencés avec possibilité de translation axiale sur l'arbre (23) et sont soutenus par le ressort (50) avec une force élastique qui est choisie de manière que lorsqu'on atteint un couple de rattrapage maximum déterminé la force axiale appliquée par l'élément menant (15) sur l'élément mené (20) atteint la hauteur de la force élastique, de sorte que lors d'une poursuite de la translation de l'élément menant (15), l'élément mené (20), la roue libre (40), le manchon d'accouplement (41) et la bague d'accouplement (48) sont déplacés en translation et sans rotation contre le ressort (50).

19. Dispositif de rattrapage d'usure selon l'une des revendications précédentes, **caractérisé en ce qu'**il est prévu un système d'empêchement de rotation entre l'élément menant (15) et l'élément mené (20), système qui bloque une rotation de l'élément mené (20) lorsque le frein à disque n'est pas actionné.

20. Dispositif de rattrapage d'usure selon la revendication 19, **caractérisé en ce que** le système d'empêchement de rotation est constitué par un ressort (55) qui s'appuie d'une part sur l'élément mené (20) et d'autre part sur l'élément menant (15), et qui se trouve sous précontrainte dans l'état non freiné du frein à disque.
